# EUROPÄISCHE PATENTSCHRIFT

(11) **EP 0 735 632 B1**
(45) Veröffentlichungstag und Bekanntmachung des Hinweises auf die Patenterteilung: **24.07.2002**
(21) Anmeldenummer: 96104574.7
(22) Anmeldetag: 22.03.1996
(51) Int. Cl.: H01R 35/04, B60R 16/02, H01R 35/02

(54) **Vorrichtung zur Signalübertragung zwischen zwei Endstellen**
Device for signal transmission between two terminals
Dispositif de transmission de signaux entre deux terminaux

(30) Priorität: 30.03.1995 DE 19511654
(43) Veröffentlichungstag der Anmeldung: 02.10.1996
(73) Patentinhaber: Alcatel Kabel AG & Co., 30179 Hannover (DE)
(72) Erfinder: Wolf, Klaus-Uwe, Dipl.-Ing., 91058 Erlangen (DE); Schauer, Friedrich, Dipl.-Ing., 90562 Heroldsberg (DE)
(74) Vertreter: Döring, Roger, Dipl.-Ing.

(56) Entgegenhaltungen:
- DE-A- 4 211 264
- DE-A- 4 419 075
- US-A- 5 171 153

## Beschreibung

Die Erfindung bezieht sich auf eine Vorrichtung zur Signalübertragung zwischen zwei Endstellen, von denen mindestens eine relativ zu der anderen bewegbar ist und die durch mindestens eine in Windungen verlaufende Leitung verbunden sind, an welche an den beiden Endstellen weiterführende Leitungen anschließbar sind, bei welcher die Leitung in einer im wesentlichen kreisringförmig ausgebildeten Kassette untergebracht ist, die aus einem eine der Endstellen tragenden Stator und aus einem um ihre Achse und gegenüber dem Stator drehbaren, die andere Endstelle tragenden Rotor besteht, bei welcher die Windungen der Leitung in einen inneren Wickelbereich und einen äußeren Wickelbereich mit unterschiedlicher Wickelrichtung unterteilt sind, zwischen denen eine etwa U-förmig ausgebildete Umkehrstelle liegt, und bei welcher zwischen den beiden Wickelbereichen ein ringförmiger, die Umkehrstelle der Windungen umfassender Führungskörper angebracht ist, der in Umfangsrichtung der Kassette bewegbar ist und bei dem zumindest die innere Umfangsfläche als Anlage für die Windungen des inneren Wickelbereichs ausgebildet ist (DE-A-42 11 264).

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der EP-A-0 417 350 wird für die Signalübertragung elektrischer Strom verwendet. Die Stromübertragung erfolgt durch eine nach Art eines Federhauses zu einem Wickelkörper gewickelte und in einer Kassette untergebrachte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Die FBL kann so die Drehbewegungen eines Lenkrads mitmachen, ohne daß der Signalpfad unterbrochen wird. Damit in beiden Drehrichtungen eine ausreichende Anzahl von Umdrehungen durchgeführt werden kann, wird eine entsprechend lange FBL benötigt, die in einer großen Anzahl von Windungen in der Kassette liegt. Diese Vorrichtung ist prinzipiell in der Praxis einsetzbar. Wegen der großen Länge der Leitung und deren relativ hohem ohmschen Widerstand können aber insbesondere bei geringen Stromstärken für die zu übertragenden Signale Schwierigkeiten auftreten.

Bei der Vorrichtung nach der eingangs erwähnten DE-A-42 11 264 ist die Länge der zwischen den beiden Endstellen eingesetzten Leitung wesentlich kürzer als bei der im Vorangehenden geschilderten Vorrichtung. Die gewickelte Leitung ist in einen inneren und einen äußeren Wickelbereich unterteilt, in denen die Windungen unterschiedliche Wickelrichtung haben. Die beiden Wickelbereiche sind durch eine etwa U-förmige Umkehrstelle miteinander verbunden.

Zwischen den beiden Wickelbereichen liegt ein die Umkehrstelle umfassender, ringförmiger Führungskörper, der in Umfangsrichtung der Kassette bewegbar ist. Er wird durch die gewickelte Leitung bzw. durch deren Umkehrstelle bewegt, wenn der Rotor der Kassette gedreht wird. Der Führungskörper weist mehrere, in Umfangsrichtung gegeneinander versetzte und jeweils um eine Achse drehbare Rollen auf, an denen sowohl vom inneren Wickelbereich als auch vom äußeren Wickelbereich jeweils eine Windung der Leitung anliegt, wenn der Rotor gedreht wird. Die Rollen verhindern, daß die Windung des inneren Bereichs sich zu fest an den Führungskörper anlegt, der dadurch blockiert wäre. Der Führungskörper dieser bekannten Vorrichtung ist insbesondere wegen der jeweils gesondert gelagerten Rollen aufwendig.

Der Erfindung liegt die Aufgabe zugrunde, die eingangs geschilderte Vorrichtung einfacher zu gestalten.

Diese Aufgabe wird gemäß der Erfindung dadurch gelöst, daß der Führungskörper einteilig ausgebildet ist und an mindestens einer seiner Umfangsflächen einen radial abstehenden, über seinen ganzen Umfang vorhandenen stegartigen Kragen aufweist, der in Gebrauchslage mit seiner unten liegenden Fläche auf einer korrespondierenden Fläche des Rotors aufliegt.

Der Führungskörper dieser Vorrichtung ist einteilig und daher einfach aufgebaut. Er besteht vorzugsweise aus Kunststoff und kann beispielweise durch Spritzgießen in einem Arbeitsgang hergestellt werden. Zusatzteile brauchen weder gesondert erzeugt noch am Führungskörper montiert zu werden. Durch die Auflage des Kragens auf der korrespondierenden Fläche des Rotors besteht eine lose, nicht rutschfeste Verbindung zwischen Führungskörper und Rotor. Die Festigkeit dieser Verbindung wird i. w. durch das Eigengewicht des Führungskörpers und durch die Beschaffenheit der Oberflächen von korrespondierender Fläche am Rotor und Kragen bestimmt. Beim Drehen des Rotors wird daher der Führungskörper von demselben mitgenommen, und zwar wegen der unterschiedlichen Geschwindigkeiten von Rotor und Führungskörper mit Schlupf. Wie groß der Schlupf dabei ist, hängt u. a. auch von der Größe und der Beschaffenheit der aneinander liegenden Flächen von Rotor und Kragen ab. Die Drehbewegung des Führungskörpers in der Kassette wird durch die Mitnahme durch den Rotor wesentlich unterstützt, so daß der von den Windungen bzw. der Umkehrstelle der Leitung auf den Führungskörper auszuübende Druck erheblich vermindert werden kann. Das macht sich besonders dann vorteilhaft bemerkbar, wenn in der einen Drehrichtung der Durchmesser des inneren Wickelbereichs der Leitung größer wird. Die am Führungskörper anliegende Windung der Leitung kann wegen dessen jetzt gegebener Leichtgängigkeit nicht mehr zu fest an denselben angepreßt werden. Die Windungen der Leitung bleiben vielmehr in beiden Drehrichtungen des Rotors relativ lose. Der Führungskörper kann daher nicht blockiert werden.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 eine Draufsicht auf eine offene Vorrichtung nach der Erfindung in schematischer Darstellung.
Fig. 2 einen Querschnitt durch eine Vorrichtung gemäß Fig. 1 in genauerer Ausführung.
Fig. 3 eine Einzelheit aus Fig. 2 in vergrößerter Darstellung.
Fig. 4 Einzelheiten des in der Vorrichtung eingesetzten Führungskörpers.

Die Erfindung wird im folgenden für eine Vorrichtung beschrieben, in deren Kassette eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden. Es ist prinzipiell auch möglich, zwei oder mehr Leitungen in der Kassette anzuordnen. Stellvertretend für alle anderen Möglichkeiten wird im folgenden von nur einer FBL mit elektrischen Leitern ausgegangen.

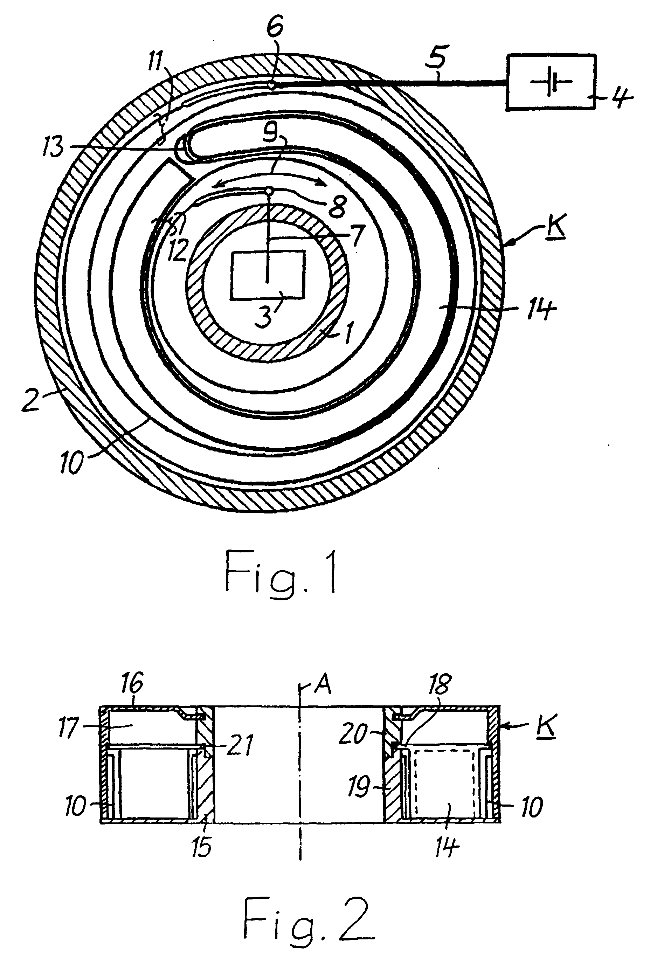

In Fig. 1 sind schematisch zwei beispielsweise kreisförmig ausgebildete Wände 1 und 2 einer im wesentlichen kreisringförmigen Kassette K dargestellt. Sie ist für den Einbau in das Lenkrad eines Kraftfahrzeugs bestimmt. Die Wand 1 soll im dargestellten Ausführungsbeispiel zum Rotor der Kassette K gehören, während die Wand 2 Teil des Stators derselben ist. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses an den Endstellen 6 und 8 sind nicht genauer dargestellt. Sie sind prinzipiell in unterschiedlichen Varianten bekannt und hier nicht von Bedeutung.

Die FBL 10 ist gemäß Fig. 1 in der Kassette K zwischen den beiden Endstellen 6 und 8 in Windungen angeordnet, die in einen äußeren Wickelbereich 11 und einen inneren Wickelbereich 12 unterteilt sind. Die beiden Wickelbereiche 11 und 12 sind durch Klammern gekennzeichnet. Sie umfassen in der aus Fig. 1 ersichtlichen Mittelstellung bzw. in der Montageposition der Kassette K jeweils zwei bis drei Windungen. In den beiden Wickelbereichen 11 und 12 haben die Windungen der FBL 10 entgegengesetzte Wickelrichtungen. Die Wickelbereiche 11 und 12 sind durch eine etwa U-förmig ausgeführte Umkehrstelle 13 miteinander verbunden. Zwischen den beiden Wickelbereichen 11 und 12 ist ein einteiliger, ringförmig ausgeführter Führungskörper 14 angebracht, der die Umkehrstelle 13 umfaßt.

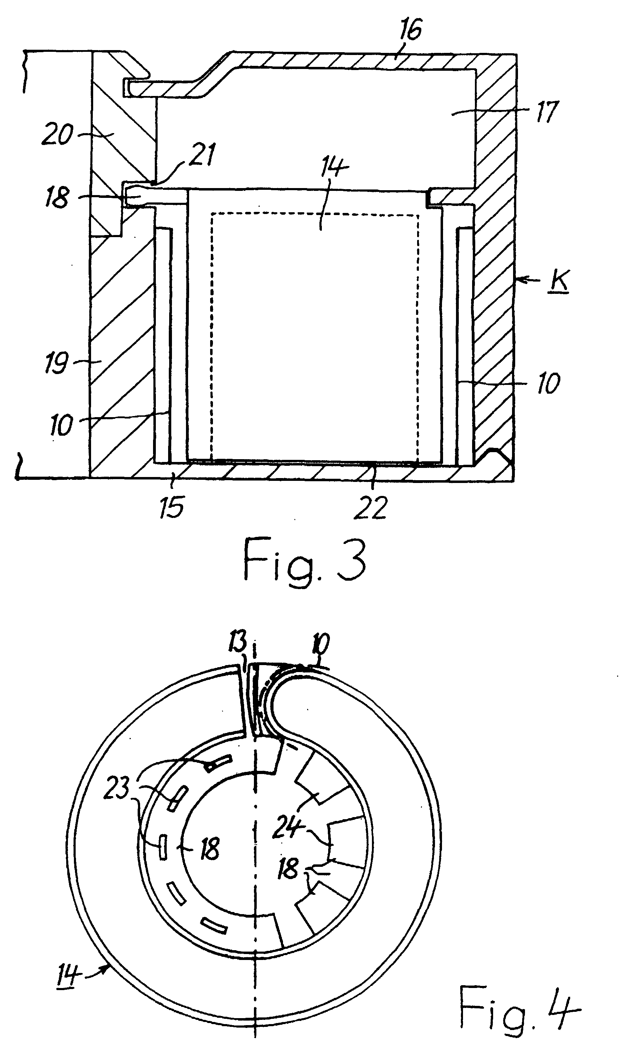

Der Führungskörper 14 ist in Umfangsrichtung der Kassette K, also in Richtung des Doppelpfeils 9, leicht beweglich. Er kann als geschlossener Ring mit einem Durchlaß für die Umkehrstelle 13 der FBL 10 ausgeführt sein. Er kann aber auch ein offener Ring sein, der sich nahezu über 360° erstreckt, so wie es in Fig. 1 dargestellt ist. Der Führungskörper 14 besteht vorzugsweise aus Kunststoff. Er ist dadurch sehr leicht, so daß er leichtgängig und nahezu geräuschfrei in der Kassette K bewegt werden kann. Die genauere Ausgestaltung des Führungskörpers 14, der in Fig. 1 nur prinzipiell dargestellt ist, geht aus den Fig. 2 und 3 hervor.

Die in Fig. 2 dargestellte Kassette K hat einen um ihre Achse A drehbaren, kreisringförmigen Rotor 15 und einen feststehenden, ebenfalls kreisringförmigen Stator 16, der beispielsweise fest mit der Lenksäule eines Kraftfahrzeugs verbunden ist. Rotor 15 und Stator 16 schließen einen Ringraum 17 zwischen sich ein. In dem Ringraum 17 sind der Führungskörper 14 und die in Windungen verlaufende FBL 10 angeordnet. Der Einfachheit halber ist in Fig. 2 auf jeder Seite des Führungskörpers 14 nur eine Windung der FBL 10 eingezeichnet. Weitere Einzelheiten der Kassette K sind in den Fig. 2 und 3 nicht dargestellt. Sie sind grundsätzlich bekannt und für den hier beschriebenen Gegenstand nicht von Bedeutung.

Bei dem in Fig. 2 dargestellten Ausführungsbeispiel hat der Führungskörper 14 an seiner in Gebrauchslage oben liegenden Stirnfläche einen stegartigen Kragen 18, der radial nach innen weist. Der Kragen 18 ist in bevorzugter Ausführungsform als umlaufende Ringscheibe ausgeführt. Er könnte jedoch auch durch mehrere Stege 24 (Fig. 4) gebildet werden, die in der gleichen Ebene liegend in Umfangsrichtung gegeneinander versetzt über den ganzen Umfang des Führungskörpers 14 verteilt angeordnet sind. Der Kragen 18 könnte bei entsprechender Gestaltung von Rotor 15 und Stator 16 auch außen am Führungskörper 14 angebracht sein. In diesem Sinne ist es auch möglich, einen Kragen 18 in jeder beliebigen axialen Höhe des Führungskörpers 14 anzuordnen, bis hin zu seiner in Gebrauchslage unten liegenden Stirnfläche.

Der Rotor 15 hat eine die Achse A mit Abstand konzentrisch umgebende Nabe 19, zu der ein dieselbe in axialer Richtung verlängernder Ansatz 20 gehört. Er ist in der fertigen Kassette K fest mit der Nabe 19 verbunden, beispielsweise durch Verschweißen mittels Ultraschalls. Der Stator 16 greift in den Ansatz 20 in einer Art Lagerstelle ein. Durch diese Lagerstelle ist der Rotor 15 im Stator 16 um die Achse A drehbar.

Zwischen Nabe 19 und Ansatz 20 befindet sich ein in Richtung des Ringraums 17 offener Spalt 21, der umlaufend rund um die Nabe 19 vorhanden ist. Die in Gebrauchslage der Kassette K untere Fläche im Spalt 21 dient zur Auflage des Kragens 18 des Führungskörpers 14. Sie ist für den Kragen 18 die korrespondierende Fläche im Rotor 15. Der Kragen 18 des Führungskörpers 14 ragt in montiertem Zustand in den Spalt 21 hinein. Er liegt dann mit seiner unten liegenden Fläche auf der nach oben weisenden korrespondierenden Fläche im Spalt 21 auf. Andere Teile des Führungskörpers 14 berühren den Rotor 15 nicht. Es verbleibt insbesondere an der unteren Stirnfläche des Führungskörpers 14 ein freier Zwischenraum 22 zum Rotor 15. Der Kragen 18 des Führungskörpers 14 wird daher i. w. durch dessen Eigengewicht an die korrespondierende Fläche im Spalt 21 des Rotors 15 gedrückt. Diese Anlage des Kragens 18 am Rotor 15 reicht aus, um den Führungskörper 14 bei einer Drehung des Rotors 15 mitzudrehen.

Bei der Montage der aus den Fig. 2 und 3 ersichtlichen Kassette K wird zunächst der Führungskörper 14 in den Rotor 15 eingesetzt, bevor der Ansatz 20 auf der Nabe 19 befestigt wird. Der Kragen 18 des Führungskörpers 14 ist dann im Spalt 21 lose und daher drehbar angeordnet. Er liegt auf der Nabe 19 auf.

Wenn sowohl der Kragen 18 als auch die korrespondierende Fläche des Rotors 15 ohne Unterbrechung umlaufend ausgeführt sind, können gemäß der linken Seite von Fig. 4 an der unteren Fläche des Kragens 18 in Umfangsrichtung gegeneinander versetzte, in axialer Richtung abstehende Vorsprünge 23 angebracht sein, durch welche die Größe der Anlagefläche zwischen beiden Teilen vermindert wird. Es ist aber auch möglich, alternativ dazu, solche Vorsprünge auf der korrespondierenden Fläche des Rotors 15 anzubringen.

Wenn der Kragen 18 entsprechend der rechten Seite von Fig. 4 aus in Umfangsrichtung gegeneinander versetzten, in einer Ebene liegenden Stegen 24 besteht, muß die korrespondierende Fläche im Spalt 21 des Rotors 15 durchgehend ausgeführt sein. Diese Fläche kann aber dann in Umfangsrichtung mehrmals unterbrochen sein, wenn der Kragen 18 als ununterbrochene, umlaufende Ringscheibe ausgeführt ist. Auch in diesen beiden Ausführungsformen ist die Größe der Anlagefläche zwischen Kragen 18 und Rotor 15 verkleinert.

Der Kragen 18 kann in allen möglichen Ausführungsformen auch federnd ausgebildet sein. Das bietet sich besonders beim Einsatz von Stegen 24 als Kragen 18 an.

## Patentansprüche

1. Vorrichtung zur Signalübertragung zwischen zwei Endstellen (6, 8), von denen mindestens eine relativ zu der anderen bewegbar ist und die durch mindestens eine in Windungen verlaufende Leitung (10) verbunden sind, an welche an den beiden Endstellen weiterführende Leitungen anschließbar sind (6, 8), bei welcher die Leitung (10) in einer im wesentlichen kreisringförmig ausgebildeten Kassette (K) untergebracht ist, die aus einem eine der Endstellen (6, 8) tragenden Stator und aus einem um ihre Achse und gegenüber dem Stator drehbaren, die andere Endstelle tragenden Rotor besteht, bei welcher die Windungen der Leitung (10) in einen inneren Wickelbereich (12) und einen äußeren Wickelbereich (11) mit unterschiedlicher Wickelrichtung unterteilt sind, zwischen denen eine etwa U-förmig ausgebildete Umkehrstelle (13) liegt, und bei welcher zwischen den beiden Wickelbereichen ein ringförmiger, die Umkehrstelle der Windungen umfassender Führungskörper (14) angebracht ist, der in Umfangsrichtung der Kassette (K) bewegbar ist und bei dem zumindest die innere Umfangsfläche als Anlage für die Windungen des inneren Wickelbereichs (12) ausgebildet ist, **dadurch gekennzeichnet, daß** der Führungskörper (14) einteilig ausgebildet ist und an mindestens einer seiner Umfangsflächen einen radial abstehenden, über seinen ganzen Umfang vorhandenen stegartigen Kragen (18) aufweist, der mit seiner in Gebrauchslage unten liegenden Fläche auf einer korrespondierenden Fläche des Rotors (15) aufliegt.

2. Vorrichtung nach Anspruch 1, **dadurch gekennzeichnet, daß** der Kragen (18) als umlaufende Ringscheibe ausgebildet ist.

3. Vorrichtung nach Anspruch 1, **dadurch gekennzeichnet, daß** der Kragen (18) aus mehreren, in Umfangsrichtung des Führungskörpers (14) gegeneinander versetzten und in einer Ebene liegenden Stegen (24) besteht.

4. Vorrichtung nach einem der Ansprüche 1 bis 3, **dadurch gekennzeichnet, daß** der Kragen (18) an der in Gebrauchslage oben liegenden Stirnfläche des Führungskörpers (14) angebracht ist.

5. Vorrichtung nach einem der Ansprüche 1 bis 4, **dadurch gekennzeichnet, daß** der Kragen (18) innen am Führungskörper (14) angebracht ist.

6. Vorrichtung nach einem der Ansprüche 1 bis 4, **dadurch gekennzeichnet, daß** der Kragen (18) außen am Führungskörper (14) angebracht ist.

7. Vorrichtung nach einem der Ansprüche 1 bis 6, **dadurch gekennzeichnet, daß** an der in Gebrauchslage unten liegenden Fläche des Kragens (18) in Umfangsrichtung gegeneinander versetzte Vorsprünge (23) angebracht sind.

8. Vorrichtung nach einem der Ansprüche 1 bis 6, **dadurch gekennzeichnet, daß** auf der korrespondierenden Fläche des Rotors (15) in Umfangsrichtung gegeneinander versetzte Vorsprünge angebracht sind.

9. Vorrichtung nach einem der Ansprüche 1 bis 7, **dadurch gekennzeichnet, daß** der Kragen (18) federnd ausgebildet ist.

## Claims

1. A device for the signal transmission between two end points (6, 8), at least one of which may be moved relative to the other, which are connected by at least one bent lead (10). wherein continuing leads may be connected to the two end points (6. 8) and the lead (10) is stored essentially in a cyclic case (K) consisting of one stator holding one of the end points (6, 8) and one rotor, which may be rotated around the case axis and around the stator, holding the other end point. the windings of the lead (10) are divided into an inner winding area (12) and an outer winding area (11) with different winding direction between the two winding areas, there is a turning point (13), which is approximately U-shaped, and also between the two winding areas, there is a guide (14) surrounding the winding turning point, which is movable in the direction of the case (K) circumference and where at least the inner circumference surface is designed as a support for the windings of the inner winding area (12). **characterized in that** the guide (14) is designed in one part and equipped it with a bar-like collar (18) at least on one of its circumference surfaces, wherein the collar is protruding radially and is covering the entire circumference, wherein the bottom side of the collar is in contact with the corresponding surface of the rotor (15) when it is in use.

2. A device according to claim 1, **characterized in that** the collar (18) is designed as a surrounding ring disk.

3. A device according to claim 1, **characterized in that** the collar (18) consists of several bars (24) that are located in one plane and staggered in direction of the circumference of the guide (14).

4. A device according to one of the claims 1 to 3, **characterized in that** the collar (18) is attached to the front face of the guide (14) that is on top when it is in use.

5. A device according to one of the claims 1 to 4, **characterized in that** the collar (18) is attached to the inside of the guide (14).

6. A device according to one of the claims 1 to 4, **characterized in that** the collar (18) is attached to the outside of the guide (14).

7. A device according to one of the claims 1 to 6, **characterized in that** ledges (23) staggered in direction of the circumference are attached to the surface the collar (18) that is on the bottom when it is in use.

8. A device according to one of the claims 1 to 6, **characterized in that** ledges staggered in direction of the circumference are attached to the corresponding surface of the rotor (15).

9. A device according to one of the claims 1 to 7, **characterized in that** the collar (18) is designed springy.

## Revendications

1. Dispositif pour la transmission de signaux entre deux points terminaux (6, 8) dont l'un au moins est mobile par rapport à l'autre et qui sont reliés par au moins un câble enroulé en spires (10) aux deux extrémités de laquelle peuvent être raccordées d'autres câbles (6, 8), dans lequel le câble (10) est logé dans une cassette (K) de forme essentiellement annulaire, se composant d'un stator portant l'un des points terminaux (6, 8) et un rotor portant l'autre point terminal, tournant à la fois autour de son axe et autour du stator, dans lequel les spires du câble (10) sont réparties en une zone d'enroulement intérieure (12) et une zone d'enroulement extérieure (11) avec un sens d'enroulement différent. entre lesquelles se trouve un point d'inversion (13) en forme de U approchée et dans lequel est disposé, entre les deux zones d'enroulement, un corps de guidage (14) annulaire, entourant le point d'inversion des spires, mobile dans le sens de la circonférence de la cassette (K) et sur lequel au moins la surface de sa circonférence intérieure forme un appui pour les spires de la zone d'enroulement intérieure (12), **caractérisé en ce que** le corps de guidage (14) est réalisé en une seule pièce et présente, au moins sur l'une de ses surfaces de circonférence, une collerette (18) en forme de nervures, s'écartant radialement et présente sur toute la circonférence, qui, en position d'utilisation est posée avec sa surface inférieure sur une surface correspondante du rotor (15).

2. Dispositif selon la revendication 1, **caractérisé en ce que** la collerette (18) est conçue comme disque annulaire rotatif.

3. Dispositif selon la revendication 1, **caractérisé en ce que** la collerette (18) se compose de plusieurs nervures (24) décalées les unes par rapport aux autres dans le sens de la circonférence du corps de guidage (14) et situées au même niveau.

4. Dispositif selon l'une des revendications 1 à 3. **caractérisé en ce que** la collerette (18) est disposée sur la surface frontale du corps de guidage (14) située en haut en position d'utilisation.

5. Dispositif selon l'une des revendications 1 à 4, **caractérisé en ce que** la collerette (18) est disposée à l'intérieur du corps de guidage (14).

6. Dispositif selon l'une des revendications 1 à 4, **caractérisé en ce que** la collerette (18) est disposée à l'extérieur du corps de guidage (14).

7. Dispositif selon l'une des revendications 1 à 6, **caractérisé en ce que** des saillies (23), décalées les unes par rapport aux autres dans le sens de la circonférence, sont disposées sur la surface de la collerette (18) située en-dessous en position d'utilisation.

8. Dispositif selon l'une des revendications 1 à 6, **caractérisé en ce que** des saillies, décalées les unes par rapport aux autres dans le sens de la circonférence, sont disposées sur la surface correspondante du rotor (15).

9. Dispositif selon l'une des revendications 1 à 7, **caractérisé en ce que** la collerette (18) est élastique.
